# EUROPÄISCHE PATENTANMELDUNG

(11) **EP 2 428 178 A1**
(43) Veröffentlichungstag der Anmeldung: **14.03.2012**
(21) Anmeldenummer: 11177790.0
(22) Anmeldetag: 17.08.2011
(51) Int. Cl.: A61C 5/12

(54) **Interdentalkeil**

(30) Priorität: 08.09.2010 DE 102010040414
(71) Anmelder: VOCO GmbH, 27472 Cuxhaven (DE)
(72) Erfinder: Leiner, Uwe, 27632 Midlum (DE); Plaumann, Manfred Thomas, 27476 Cuxhaven (DE)
(74) Vertreter: Eisenführ, Speiser & Partner

(57) **Zusammenfassung**

Die Erfindung betrifft einen Interdentalkeil zur Verwendung mit einem Matrizenband (17) bei einer Erstellung einer Füllung an einem zu restaurierenden Zahn und/oder zur Verwendung mit einem Kofferdam unter Einführung des Interdentalkeils in einen gingivanahen Bereich zwischen dem zu restaurierenden oder zu therapierenden Zahn und einem angrenzenden Zahn mit einem Einführbereich mit einem von einer Unterseite (3), einer Innenseite (2) und einer Außenseite begrenzten Querschnitt, wobei im gingivanah eingeführten Zustand die Unterseite (3) dem Zahnfleisch (4), die Innenseite (2) dem zu restaurierenden oder zu therapierenden Zahn und die Außenseite dem angrenzenden Zahn zugewandt sind, wobei die Innenseite (2) und die Unterseite (3) in einer Kante (1) zusammenlaufen, die dazu ausgestaltet ist, im gingivanah eingeführten Zustand am zu restaurierenden oder zu therapierenden Zahn anzuliegen, um gegen einen Durchtritt von Material dichtend zu wirken.

## Beschreibung

Die Erfindung betrifft einen Interdentalkeil zur Verwendung mit einem Matrizenband bei einer Erstellung einer (insbesondere dentalen) Füllung an einem zu restaurierenden Zahn unter Einführung des Interdentalkeils in einen gingivanahen Bereich zwischen dem zu restaurierenden Zahn und einem angrenzenden Zahn und zielt insbesondere auf die Bereitstellung eines anatomisch geformten Interdentalkeils ab, der eine verbesserte Füllungstherapie bzw. endodontische Therapie ermöglicht.

Im Dentalbereich gibt es verschiedene Methoden zur Zahnrestauration. Bei vielen zu legenden Füllungen muss nach dem Entfernen der krankhaften Zahnsubstanz ein Matrizenband um den seitlich geöffneten Zahn gelegt werden, das beispielsweise mit einem Matrizenhalter befestigt wird. Solche Matrizenbänder können unter anderem aus sehr dünner Metallfolie bestehen. Die Befestigung der Metallfolie kann zum Beispiel mit einem Matrizenhalter nach Tofflemire vollzogen werden. Bei diesem System wird das Matrizenband wie eine Schlinge um den präparierten Zahn gelegt und dann mit einer Spannvorrichtung festgezogen. Somit liegt es radial fest am Umfang des präparierten Zahns an. Wird dann die Füllung gelegt, fungiert das Matrizenband an den Stellen, wo der Zahn seitlich geöffnet wurde, als Begrenzungswand für den Füllungswerkstoff und bildet letztendlich die äußerlich sichtbare Fläche der Füllung.

Da jedoch Zähne nicht zylindrisch geformt sind, sondern vom Zahnfleisch zur Kaufläche hin häufig einen sich vergrößernden Querschnitt haben, kommt es bei Anwendung von metallischen Matrizenbändern häufig zu Undichtigkeiten im gingivanahen, d.h. zahnfleischnahen Bereich.

Bei den verwendeten Füllungswerkstoffen handelt es sich oft um pastöse, hochviskose Substanzen, zunehmend finden jedoch auch niedrigvisköse Substanzen, sogenannte "Flow"-Materialien, Verwendung. Diese werden in die Kavität hinein gefüllt, bzw. gestopft und anschließend, z.B. mit Licht, ausgehärtet. An undichten Stellen zwischen Matrizenband und Zahn kann hierbei Füllungswerkstoff austreten, der beim Belichten ebenfalls aushärtet. Dieser ausgetretene und ausgehärtete Füllungswerkstoff muss anschließend manuell entfernt werden. Da eine solche Entfernung in der Regel aufwändig und für den Patienten unangenehm ist, ist schon das Austreten des Füllungswerkstoffs unerwünscht.

In Bereichen, in denen ein benachbarter Zahn die Zugänglichkeit behindert, ist das Entfernen eines solchen Überschusses mit besonders erheblichen Schwierigkeiten verbunden. In solchen Bereichen werden aus diesem Grund Interdentalkeile eingesetzt. Diese kleinen Keile werden vor dem Füllen zwischen die Zähne gebracht und sollen das Matrizenband mehr oder weniger fest gegen den Zahnhals drücken, um auf diese Weise Undichtigkeiten zu minimieren.

Bei bekannten Keilen handelt es sich beispielsweise um kleine Holzkeile, die im Wesentlichen eine gerade Form haben. Mit diesen Keilen soll das Matrizenband gegen den zu behandelnden Zahn gedrückt werden. Hierbei kann zwar ein tangentialer Berührungspunkt geschaffen werden, der ein Schließen der Lücke zwischen Matrizenband und Zahnhals bis zu einem gewissen Grad erlaubt; es verbleibt jedoch auch hier noch immer ein Restspalt vor und hinter diesem Berührungspunkt.

Eine weitere Aufgabe von Interdentalkeilen ist es, die benachbarten Zähne an der Behandlungsstelle ein wenig auseinander zu drücken. Das ist vorgesehen, damit ein sogenannter Kontaktpunkt zwischen den beiden Zähnen hergestellt werden kann, der sich nach Entfernen des Matrizenbandes und der Keile ergibt. Der Kontaktpunkt ist eine Berührungsstelle etwas unterhalb der Ebene der Kaufläche, die die Natur eingerichtet hat, damit sich beim Kauen keine Nahrungsreste zwischen die Zähne drücken können. Die Wiederherstellung des Kontaktpunktes ist eines der Ziele bei der Restauration eines erkrankten Zahnes.

Aufgabe der vorliegenden Erfindung ist es, einen Interdentalkeil der eingangs genannten Art bereitzustellen, der geeignet ist, bei Verwendung mit einer Matrize im Zusammenhang mit einer Füllung gegenüber gingival austretendem Füllungsmaterial eine Abdichtwirkung zu leisten bzw. ein dichte Erstellung und Verwendung eines Kofferdams zu leisten, und gegebenenfalls erlaubt, eine Kraftwirkung zwischen dem zu behandelnden Zahn und dem benachbarten Zahn aufzubauen, um die Möglichkeit der Schaffung eines Kontaktpunktes zu geben.

Erfindungsgemäß wird ein Interdentalkeil zur Verwendung mit einem Matrizenband bei einer Erstellung einer Füllung an einem zu restaurierenden Zahn und/oder zur Verwendung mit einem Kofferdam unter Einführung des Interdentalkeils in einen gingivanahen Bereich zwischen dem zu restaurierenden oder zu therapierenden Zahn und einem angrenzenden Zahn vorgeschlagen, mit einem Einführbereich mit einem von einer Unterseite, einer Innenseite und einer Außenseite begrenzten Querschnitt, wobei im gingivanah eingeführten Zustand die Unterseite dem Zahnfleisch, die Innenseite dem zu restaurierenden oder zu therapierenden Zahn und die Außenseite dem angrenzenden Zahn zugewandt sind, wobei die Innenseite und die Unterseite in einer Kante zusammenlaufen, die dazu ausgestaltet ist, im gingivanah eingeführten Zustand am zu restaurierenden oder zu therapierenden Zahn anzuliegen, um gegen einen Durchtritt von Material dichtend zu wirken.

Der Erfindung liegt die Erkenntnis zugrunde, dass im Zusammenhang mit der Nutzung mit einer Matrize bei Füllungen zur Abdichtung gegenüber einem Durchtreten nicht nur ein direkt dem Nachbarzahn zugewandten Punkt oder Bereich des Matrizenbandes mit Hilfe eines Interdentalkeils angedrückt werden kann, sondern der Interdentalkeil selbst zur Abdichtung genutzt werden kann, in dem eine gingival gerichtete Undichtigkeit zusätzlich oder alternativ zum Andrücken des Matrizenbandes mit einer Kante des Keils minimiert wird. Der Effekt des erfindungsgemäßen Interdentalkeils ist nicht zwingend, das Matrizenband mit einer Federkraft gegen den Zahn zu drücken, gar auf einer verhältnismäßig langen Strecke. Eine Abdichtwirkung wird mit einem Anlegen einer Kante des Interdentalkeils an den Zahn selbst erreicht. Somit ist die bei bekannten Interdentalkeilen erforderliche Andruckkraft gegenüber der Matrize nur noch in geringerem Umfang erforderlich, wobei die Kraftwirkung im Wesentlichen auf aus ein Auseinanderdrücken der benachbarten Zähne zur Ermöglichung des Kontaktpunktes gerichtet ist. Dies erlaubt, für die Herstellung des Interdentalkeils auf eine breitere Spanne möglicher Werkstoffe zurückzugreifen, die auch handelsübliche Kunststoffe umfasst. Ungeachtet dessen kann der erfindungsgemäße Interdentalkeil allerdings auch so ausgebildet sein, dass zusätzlich zur Abdichtwirkung der Kante schon eine Abdichtwirkung durch ein Anpressen des Matrizenbandes an den (Rest-)Zahn erreicht wird, also die Abdichtwirkungen der Kante und des angepressten Matrizenbandes zusammenkommen.

Es wurde gefunden, dass es mit einem Interdentalkeil mit vergleichsweise geringer Festigkeit (z.B. aufgrund einer dünnen Kunststoffausführung) nur schwierig möglich ist, ein Matrizenband über einen weiten Bereich mit ausreichender Wirksamkeit für eine Abdichtung zu verformen. Stärkere Werkstoffe bringen allerdings eine Gefahr einer Beschädigung des zu behandelnden oder angrenzenden Zahns mit sich.

Zudem wurde gefunden, dass der erfindungsgemäße Interdentalkeil auch in vorteilhafter Weise bei einer endodontischen Therapie unter Nutzung eines Kofferdams eingesetzt werden kann.

Vorteilhafte Weiterbildungen der Erfindung sind insbesondere in den Unteransprüchen angegeben.

Bei einer vorteilhaften Ausführungsform verjüngt sich der Einführbereich in Richtung einer Spitze des Einführbereichs zumindest teilweise. Dadurch dass sich der Querschnitt zur Spitze des Einführbereichs hin verringert, wird ein Einführen des Interdentalkeils in den Zahnzwischenraum erleichtert.

Bei einer weiteren Ausführungsform sind die Innenseite zumindest teilweise konkav und die Außenseite zumindest teilweise konvex ausgeführt. Mit einer konkaven, also nach innen gekrümmten oder zumindest eingebuchteten Form der Innenseite ergibt sich eine gute Anpassung an die Zahnform.

Bei einer anderen Ausführungsform ist die Unterseite zumindest teilweise konkav ausgeführt, wobei diese Formung der Unterseite, insbesondere in einer Form ähnlich dem Hohlschliff eines Schlittschuhs, die Abdichtfähigkeit der Kante begünstigt. Hinzukommt, dass damit die nach innen gekrümmte Kante des Interdentalkeils eine gewisse zusätzliche Flexibilität erhält. Zudem wurde gefunden, dass bei einer konkaven Form der Unterseite eine insgesamt geringere Verletzungsgefahr für die zwischen den Zähnen liegende anatomische Struktur ("Col") besteht. Besonders bevorzugt weist die Unterseite eine Konvexität auf, die einem Radius im Bereich von einem Doppelten der Höhe des Interdentalkeils bis zu einem Fünftel der Höhe des Interdentalkeils im jeweiligen Querschnitt entspricht. Bei einer Implementierung ist bei einer Maximalhöhe (abhängig von der Interdentalkeilgrößensorte) des Einführbereichs von 1,5 bis 3,5 mm ein Radius der konvexen Unterseite an gleicher Stelle im Bereich von 0,5 bis 4,0 mm vorgesehen.

Bevorzugt liegt ein Eckenradius der Kante im Bereich von 0,01 bis 0,3 mm. Es wurde gefunden, dass bei einigen Materialien die Abdichtfähigkeit der Kante mit einem größeren Ecken- bzw. Kantenradius abnimmt. Zudem kann ein zu enger Kantenradius eine unbeabsichtigte Messerkante bilden bzw. eine Verletzungsgefahr mit sich bringen, wobei allerdings gefunden wurde, dass auch bei einem Eckenradius von 0,01 bis 0,05 mm eine Verletzungsgefahr bei entsprechend vorsichtiger Nutzung des Interdentalkeils beherrschbar ist. Bezogen auf die Maximalhöhe des Einführbereichs des Interdentalkeils wird insbesondere ein Eckenradius im Bereich vor 0,5% bis 15% bevorzugt, wobei der Bereich von 0,5% bis 5% besonders bevorzugt wird.

Bei einer bevorzugten Ausführungsform ist der Einführbereich zumindest teilweise in Richtung der Innenseite gekrümmt, so dass sich eine anatomische Anpassung des Interdentalkeils an die Zahnform ergibt, was insgesamt zu einem besseren Anliegen des Interdentalkeils am Zahn führt.

Bei einer weiteren vorteilhaften Ausführungsform ist die Unterseite zumindest teilweise in Richtung des Übergangs zwischen Innenseite und Außenseite gekrümmt. Insbesondere im Zusammenspiel mit der Krümmung des Interdentalkeils in Richtung der Innenseite ergibt sich damit eine weitere Annäherung an die natürliche Form des Zahns in dem Bereich, an dem der Interdentalkeil an dem Zahn anliegen bzw. ein Anpressen bewirken soll. Bevorzugt weist die Unterseite eine Krümmung in Richtung des Übergangs zwischen Innenseite und Außenseite auf, die einem Radius im Bereich von 10 bis 30 mm entspricht, alternativ einem Radius im Bereich vom vierfachen bis zum zehnfachen der Maximalhöhe des Einführbereichs des Interdentalkeils als Ganzem.

Bei einer weiteren Ausführungsform besitzt der erfindungsgemäße Interdentalkeil einen Begrenzungsbereich, der zum Einführbereich benachbart ist und der einen gegenüber dem Einführbereich vergrößerten Querschnitt aufweist, um eine Einführtiefe des Einführbereichs in Längsrichtung in den gingivanahen Bereich zu begrenzen. Mit Hilfe des Begrenzungsbereichs kann auf einfach Weise sichergestellt werden, dass der Interdentalkeil nicht zu tief bzw. zu weit zwischen die Zähne eingeführt wird, da der Begrenzungsbereich an die benachbarten Zähne anstößt und somit ein weiteres Einführen verhindert. Neben der Sicherstellung, dass keine Schäden durch ein zu tiefes bzw. weites Einführen verursacht werden, hat diese Ausführungsform den weiteren Vorteil, dass ein gewünschter Bereich aus dem Zahnzwischenraum hervorsteht, mit dessen Hilfe der Interdentalkeil wieder entfernt werden kann.

Bei einer Ausführungsform befindet sich die Kante am Ende einer Dichtlippe, insbesondere einer Dichtlippe mit im Wesentlichen konstanter Dicke. Es wurde gefunden, dass mit Hilfe eines Bereichs, der sich von dem Hauptkörper aus zur Kante erstreckt, eine vorteilhafte Dichtungswirkung erreicht werden kann, vor allem, wenn dieser Bereich in Form einer Dichtlippe ausgebildet ist, wobei über die Dicke, die Ausrichtung und das Material der Dichtlippe in einfacher Weise Einfluss auf die Kraft genommen werden kann, mit der die Kante an den Zahn angelegt wird.

Bei einer weiteren Ausführungsform weist die Innenseite zumindest teilweise zusätzlich zur Kante einen vorspringenden Dichtungsbereich auf, der dazu ausgestaltet ist, im gingivanah eingeführten Zustand des Interdentalkeils am zu restaurierenden oder zu therapierenden Zahn anzuliegen, um gegen einen Durchtritt von Material dichtend zu wirken. Bei einer mehrstufig ausgebildeten Dichtung aus Kante und Dichtungsbereich kann eine eventuell verbleibende Menge von durchtretendem Material weiter verringert werden.

Bei einer weiteren Ausführungsform weist der Interdentalkeil in einem Kantenbereich eine im Vergleich zu einem Bereich außerhalb des Kantenbereichs geringere Festigkeit und/oder eine höhere Elastizität auf. Der Kantenbereich und der Bereich außerhalb des Kantenbereichs haben in der Anwendung unterschiedliche Hauptzwecke, womit eine gezielte Anpassung der jeweiligen Materialeigenschaften Vorteile mit sich bringt.

Bei der zuvor genannten Ausführungsform kann der Kantenbereich aus einem anderen Material als der Bereich außerhalb des Kantenbereichs hergestellt sein, wobei der Interdentalkeil insbesondere mittels eines Mehrkomponenten-Spritzguss-Verfahrens hergestellt werden kann. Bei einem solchen Verfahren können unterschiedliche Werkstoffe in vergleichsweise einfacher Weise miteinander kombiniert werden, um so die Eigenschaften des Interdentalkeils als Ganzem zu optimieren.

Im Folgenden wird die vorliegende Erfindung unter Bezugnahme auf die beigefügten Figuren näher erläutert.
- Fig. 1: zeigt ein erstes Ausführungsbeispiel eines erfindungsgemäßen Interdentalkeils in einer Gesamtansicht und mit ausgewählten Querschnittsdarstellungen (Fig. 1A-1C).
- Fig. 2: zeigt ein zweites Ausführungsbeispiel eines erfindungsgemäßen Interdentalkeils in einer Gesamtansicht und mit verschiedenen Ausführungsalternativen (Fig. 2a - 2c).
- Fig. 3: zeigt einen erfindungsgemäßen Interdentalkeil im gingivanah eingeführten Zustand.
- Fig. 4: zeigt ein weiteres Ausführungsbeispiel eines erfindungsgemäßen Interdentalkeils in einer Gesamtansicht und mit einer Querschnittsdarstellung.
- Fig. 5a und Fig. 5b: zeigen weitere Ausführungsbeispiele erfindungsgemäßen Interdentalkeile.
- Fig. 6: zeigt ein Ausführungsbeispiel eines Trägers mit erfindungsgemäßen Interdentalkeilen in einer perspektivischen Darstellung und einer Seitenansicht eines Details.

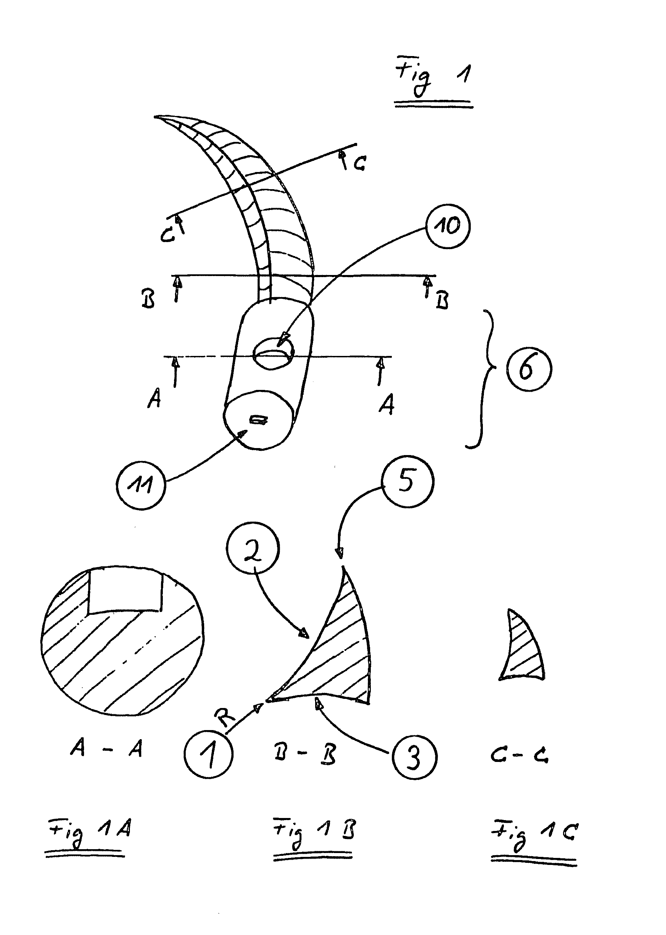

In Fig. 1 ist ein Ausführungsbeispiel eines erfindungsgemäßen Interdentalkeils dargestellt. Der dargestellte Interdentalkeil besteht aus Kunststoff und hat eine in allen 3 Raumebenen gekrümmte Kontur.

Der dargestellte Interdentalkeil umfasst einen Einführbereich mit im Wesentlichen dreiseitigem Querschnitt und einen hier rund ausgeführten Begrenzungsbereich 6 mit größerem Querschnitt, der auch als Griffbereich des Interdentalkeils dient. In Fig. 1 sind die in den Figuren 1A - 1C dargestellten Querschnittsansichten angedeutet.

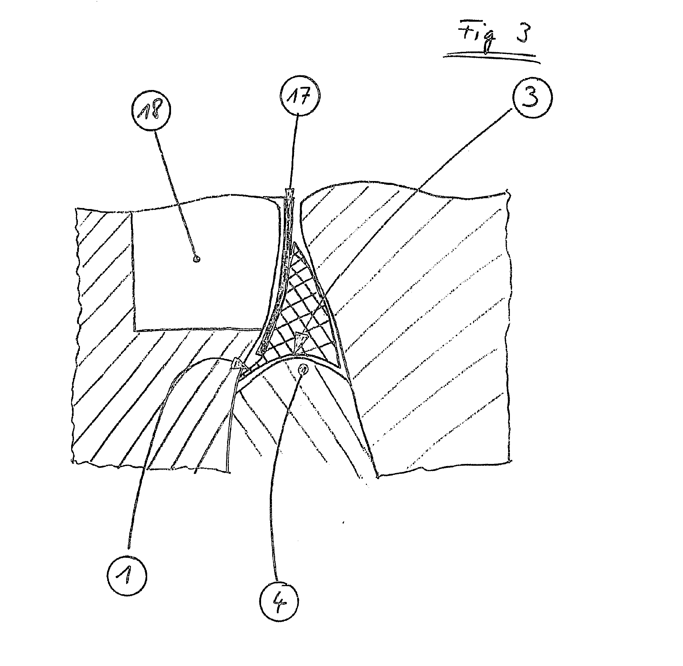

Damit er eine für die Behandlung (vornehmlich für ein Auseinanderdrücken der benachbarten Zähne (siehe Fig. 3)) ausreichende Druckkraft übertragen kann, besteht der Grundkörper aus einem verhältnismäßig festen Kunststoff. Vorgeschlagen wird die Verwendung von Polystyrol oder ABS, es können aber auch andere geeignete Kunststoffe verwendet werden. Der Elastizitätsmodul vorgesehener Grundkunststoffe liegt bevorzugt zwischen 200 MPa und 10.000 MPa.

Der Interdentalkeil hat an seiner Innenseite 2, also auf der zum zu behandelnden Zahn zeigenden Seite (vgl. Fig. 3) einen Bereich, der als Dichtkante 1 fungiert. Diese Dichtkante ist hier spitz ausgeführt, hat also einen sehr engen Kanten- oder Eckenradius R. Der Kantenradius beträgt bevorzugt 0,01 bis 0,3 mm.

Die Dichtkante 1 ergibt sich mit dem Zusammenlaufen der Innenseite 2 und der Unterseite 3, wobei sowohl die Innenseite 2 als auch die Unterseite 3 jeweils konkav ausgebildet sind (siehe insbesondere Fig. 1B und Fig. 1C), also in Richtung des Inneren des Interdentalkeils gewölbt sind.

Es ist zu bemerken, dass in dem dargestellten Ausführungsbeispiel die Krümmung der Außenflächen (d.h. Unterseite 3, Innenseite 2 und Außenseite) im Querschnitt durch den Interdentalkeil stetig vorgesehen ist, während die vorliegende Erfindung nicht auf diese Art von konkaven bzw. konvexen Flächen beschränkt ist. Die Krümmung einer oder mehrerer Seiten kann beispielweise ebenfalls unstetig sind. Hinzukommt, dass die Außenflächen zumindest teilweise so ausgestaltet sein können, dass im Querschnitt keine Krümmung vorliegt.

Die Gesamtform des in Fig. 1 illustrierten Interdentalkeils ergibt sich aus dem Querschnitt mit der konkaven Innenseite 2 und der ebenfalls konkaven Unterseite 3, während der Querschnitt mit der hier konvex vorgesehenen Außenseite abgeschlossen wird. Wie in Fig. 1 ferner zu erkennen ist, ist der Interdentalkeil in seiner Längsrichtung ebenfalls in Richtung seiner Innenseite 2 gekrümmt, wobei der Interdentalkeil sich zudem in Richtung einer Spitze verjüngt, die bei der Benutzung als erstes in den gingivanahen Bereich eingeführt wird. Damit ergeben sich die konkave Innenseite 2 und die Außenseite jeweils als zweiachsig gekrümmte Flächen. Ferner krümmt sich die Unterseite 3 in etwa einem Drittel des Einführbereichs zur Spitze hin nach oben, so dass sich zusätzlich zur Krümmung des Interdentalkeils in Richtung seiner Innenseite 2 auch eine teilweise Krümmung des Interdentalkeils von der Unterseite 3 weg ergibt.

Betrachtet man die jeweiligen Flächenschwerpunkte von benachbarten Querschnitten durch den Einführbereich des Interdentalkeils aus Fig. 1 als Linie, so ist diese Linie entsprechend der Krümmung des Interdentalkeils als Ganzem in Richtung der Innenseite 2 gekrümmt, wobei sich ebenfalls eine Krümmung dieser Linie von der Unterseite 3 weg ergibt. Alternativ kann sich der Verlauf der Flächenschwerpunkte auch so ergeben, dass die damit beschriebene Linie einen Knick nach oben aufweist, der sich aus dem Verlauf der Verjüngung und der Krümmung der Einführbereichs von der Unterseite 3 weg ergibt.

Der Bereich der Kante 1 ist aufgrund seiner Form flexibel und kann sich damit gut an kleine Unregelmäßigkeiten der natürlichen Zahnoberfläche anschmiegen und garantiert somit eine lückenlose Abdichtung. Da der Kunststoff im Bereich der Kante des Interdentalkeils im Wesentlichen flexibel ist, wird die Fähigkeit, eine ausreichende Druckkraft aufzubauen, nicht beeinträchtigt.

Bei der Verwendung von Interdentalkeilen ist es wichtig, dass der Einsatz richtig herum, d.h. mit der Unterseite 3 zum Zahnfleisch gerichtet, erfolgt (vgl. Fig. 3). Würde ein Interdentalkeil der dargestellten Form mit der spitzen, der Unterseite 3 gegenüberliegenden oberen Kante 5 zum Zahnfleisch gerichtet eingesetzt werden, könnte daraus eine Reizung oder sogar eine Verletzung des Zahnfleisches resultieren.

Auf der der Unterseite 3 gegenüber liegenden Oberseite des Griffabschnittes 6 des in Fig. 1 dargestellten Interdentalkeils befindet sich eine Markierung 10. Diese Markierung ermöglicht dem behandelnden Zahnarzt in den beengten Verhältnissen der Mundhöhle eine sichere Erkennung der Oberseite und verhindert damit ein irrtümliches falsch ausgerichtetes Einsetzen eines Interdentalkeils. Die Markierung hat in diesem Beispiel die Form eines Kreises, kann aber auch eine andere Form haben. Darüber hinaus oder alternativ dazu ist es möglich, an der der Unterseite entsprechenden Seite des Griffabschnittes 6 eine (weitere) Markierung, zum Beispiel in Form eines "X" vorzusehen, die demselben Zweck dient.

Die Markierung(en) kann/können gleichzeitig dazu dienen, eine verbesserte Angriffsfläche für das Herausziehen zu bieten. Auch das Anbringen weiterer Markierungen, z.B. um 90° versetzt, ist möglich.

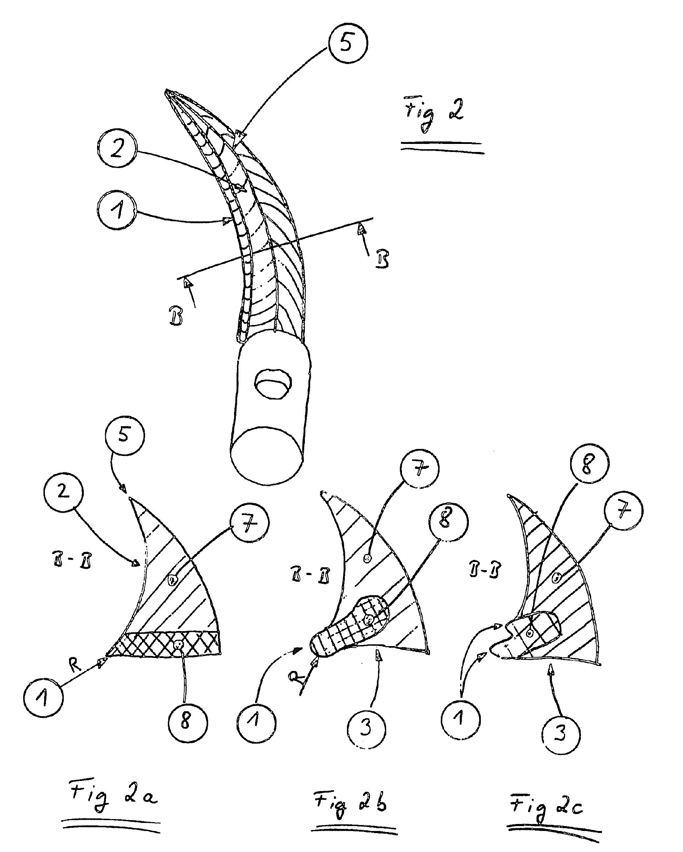

Ein weiteres Ausführungsbeispiel eines erfindungsgemäßen Interdentalkeils ist in Fig. 2 dargestellt. Der in Fig. 2 dargestellte Interdentalkeil entspricht weitgehend dem mit Bezug auf Fig. 1 diskutierten Ausführungsbeispiel, wobei er allerdings aus verschiedenen Kunststoffen besteht. Ein solcher Interdentalkeil kann mit Hilfe der dem Fachmann bekannten 2-Komponenten-Spritzguss-Methode hergestellt werden.

Der Einführbereich umfasst hierbei einen Grundkörper 7, der aus einem ersten, verhältnismäßig festen Kunststoff hergestellt ist, der in der Lage ist, eine gewisse Federwirkung zu entfalten, und vor allem in der Lage ist, eine gewünschte bzw. erforderliche Druckkraft zu übertragen. Der Grundkörper 7 macht im Querschnitt (vgl. die in Fig. 2a bis Fig. 2c gezeigten Querschnittsalternativen) den Hauptteil des Einführbereichs aus. Ein Kantenbereich 8, der die Kante 1 des Interdentalkeils umfasst, ist hingegen aus einem zweiten, im Vergleich zum ersten Kunststoff weicheren Kunststoff hergestellt, der flexibel und elastisch ist und somit eine weiter verbesserte Abdichtung zulässt. Bei dem weichen Kunststoff kann es sich beispielsweise um ein thermoplastisches Elastomer oder um ein Silikon handeln. Die vorgesehene Shore-Härte liegt hierbei bevorzugt zwischen 20 Shore D und 80 Shore D.

Die Figuren 2a bis 2c zeigen verschiedene Möglichkeiten zur Ausgestaltung der Dichtkante 1 bzw. des Kantenbereichs 8.

Die Unterseite 3 ist in der in Fig. 2a gezeigten Ausführung im Querschnitt plan ausgebildet, ohne dass dies eine zumindest teilweise Krümmung der Unterseite in Längsrichtung des Interdentalkeils ausschließen würde. Hier wird die gewünschte Flexibilität der Kante 1 vornehmlich durch den weicheren Kunststoff des Kantenbereichs 8 erreicht, der sich in diesem Fall über den gesamten unteren Querschnitt entlang der Unterseite 3 erstreckt.

Die Kante in Fig. 2b ist rund ausgestaltet, während die Unterseite 3 wiederum konkav ausgeführt ist. Im Gegensatz zu Fig. 2a wird der Kantenbereich 8 in der Option von Fig. 2b zum größten Teil vom Grundkörper 7 umschlossen und erstreckt sich im Bereich der Kante 1 aus dem Grundkörper 1 heraus. Zur besseren Verankerung im Grundkörper kann der Kantenbereich eine Verdickung im Inneren aufweisen.

Ähnlich zu Fig. 2b wird auch in Fig, 2c der Kantenbereich 8 weitgehend vom Grundkörper 7 umschlossen, wobei allerdings in der Alternative von Fig. 2c eine doppelte Dichtkante aus Kante 1 und einem zusätzlichen Dichtungsbereich vorgesehen ist.

Es ist zu bemerken, dass die Ausführungen der Kantenform in den Ausführungsbeispielen, die in den Figuren insgesamt dargestellt sind, nicht auf das jeweilige Ausführungsbeispiel beschränkt sind, so dass die Erfindung beispielweise auch in der Geometrie des Ausführungsbeispiels von Fig. 1 in einer Mehr-Komponenten-Variante entsprechend Fig. 2 ausgeführt werden kann. Hinzukommt, dass die Ausgestaltung der Kante 1 bzw. des Kantenbereichs 8 nicht über die gesamte Länge des Einführbereichs die gleiche sein muss, so dass in einem erfindungsgemäßen Interdentalkeil auch verschiedenen Aspekte von Kanten- bzw. Kantenbereichsausführungsbeispielen kombiniert sein können.

Fig. 3 zeigt einen erfindungsgemäßen Interdentalkeil im Einsatz bei der Erstellung einer Füllung in einer Querschnittsdarstellung. Hierbei ist ein Matrizenband 17 dargestellt, das in seinem unteren Bereich vom Interdentalkeil, der in den Bereich zwischen dem zu restaurierenden Zahn und dem benachbarten Zahn eingeführt ist, gegen den zur Restauration vorbereiteten Zahn gedrückt wird. Ein Bereich 18 des Zahns ist zur Füllung vorbereitet. Ferner ist zu sehen, dass die Kante 1 des Interdentalkeils den unter dem Matrizenband 17 verbleibenden Spalt (zwischen dem Zahn und dem Matrizenband 17) abdichtet. Neben der die Dichtwirkung und Flexibilität der Kante 1 verbesserten Wirkung der konkaven Form der Unterseite 3 zeigt sich in Fig. 3 zudem der weitere Vorteil dieser Ausformung damit, dass der Interdentalkeil vorteilhaft an die Form des Zahnfleischs 4 zwischen den Zähnen angepasst ist.

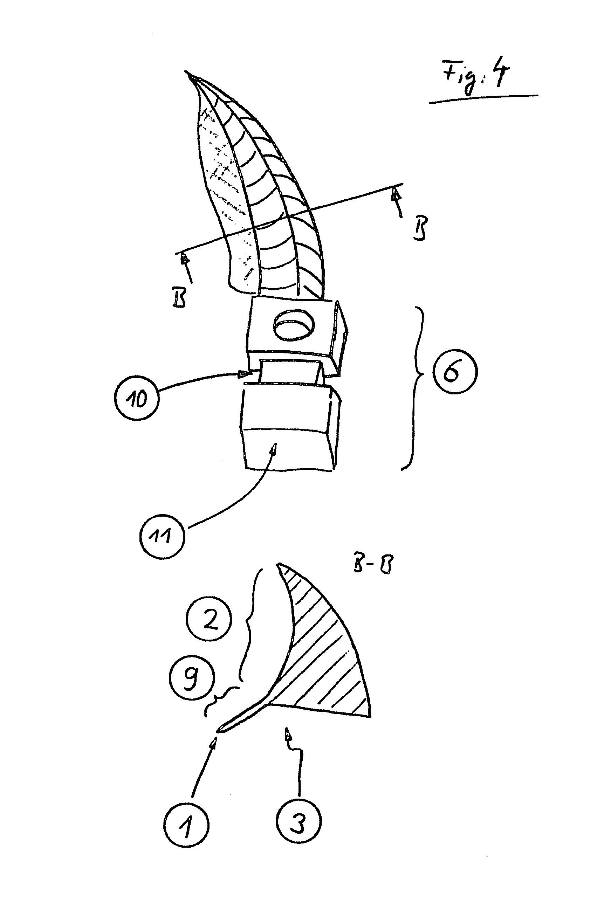

Eine weitere Möglichkeit, die gewünschte Dichtwirkung zu erreichen, besteht darin, den erfindungsgemäßen Interdentalkeil auf seiner inneren, dem zu behandelnden Zahn zugewandten Seite mit einer dünnen Dichtlippe 9 auszustatten, an deren Spitze die Kante 1 vorgesehen ist. Dieses Ausführungsbeispiel ist in Fig. 4 dargestellt, wobei die Unterseite als Spezialfall einer konkaven Form einen "Knick" aufweist. Die Dichtlippe 9 erstreckt sich von Hauptkörper des Interdentalkeils mit im Querschnitt im Wesentlichen konstanter Dicke zur am Ende vorgesehenen Kante 1 (siehe Querschnitt B-B in Fig. 4) und kann auch insbesondere dann wirksam vorgesehen werden, wenn der Interdentalkeil (bzw. der Einführbereich) nur aus einem einzigen Werkstoff besteht. Die Materialauswahl des Werkstoffs für diesen Ansatz kann der Fachmann entsprechend den zur Verfügung stehenden Möglichkeiten ohne weiteres treffen. Dabei ist allerdings zu beachten, dass der Kunststoff in der Lage sein muss, die nötige bzw. gewünschte Druckkraft zu übertragen. Darüberhinaus ist vorgesehen, dass die Dichtlippe 9 eine ausreichende Fähigkeit zur Verformung besitzt, ohne zu brechen oder einzureißen. Viele der bekannten Kunststoffe bieten im Gegensatz zu anderen Materialklassen wie Metallen oder Holz diese Möglichkeiten. Als Beispiele ohne den Anspruch auf Vollständigkeit seien Polypropylen, schlagzähes ABS, Polyethylen oder Polyamid genannt.

Abweichend von den in Fig. 1 und Fig. 2 illustrierten Ausführungsbeispielen weist der in Fig, 4 gezeigte Interdentalkeil an seinem proximalen Ende 11 eine nicht-keilförmige Verdickung 6 auf, die als Griffabschnitt dient und hier quadratisch ausgebildet ist und zudem eine Vertiefung 10 aufweist.

Die Verdickung, die vorteilhafterweise als Begrenzung für die Einführtiefe des Einführbereichs dienen kann, kann beispielsweise zylindrisch, quadratisch oder auch anders geformt sein.

Diese Verdickung dient in dem Beispiel dem Zweck, dass der Keil nicht zu weit in den Zahnzwischenraum hineingeschoben wird, und erfüllt zudem die Funktion einer Grifffläche zum Entfernen, d.h. Herausziehen des Interdentalkeils.

Dazu wird der erfindungsgemäße Interdentalkeil, ähnlich wie bei bekannten Interdentalkeilen, mit einem Werkzeug wie einer kleinen Zange oder Pinzette gegriffen und herausgezogen.

Damit das Werkzeug nicht einfach abrutscht, weist der erfindungsgemäße Interdentalkeil in diesem Beispiel eine Vertiefung 10 auf, die eine formschlüssige Krafteinleitung ermöglicht. Es können auch mehrere Vertiefungen vorgesehen werden.

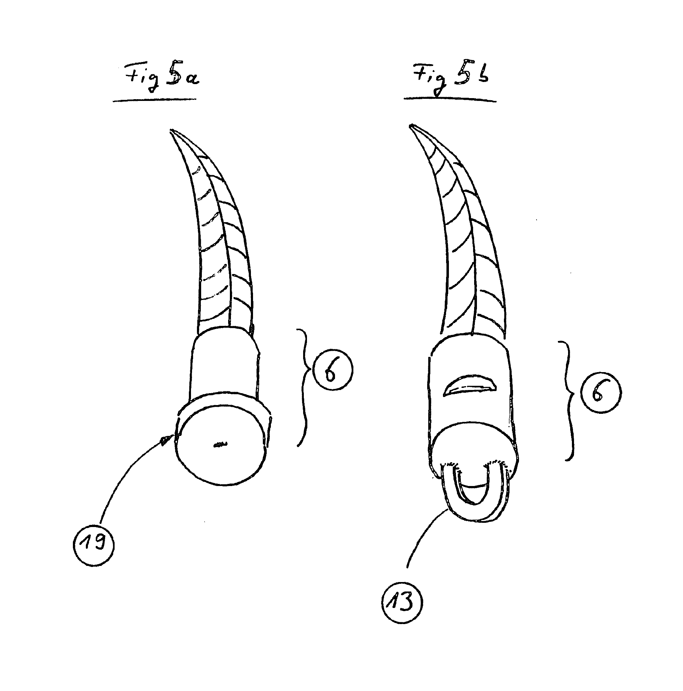

Es ist auch möglich, dass das proximale Ende des Interdentalkeils beispielsweise einen zylindrischen Absatz 19 mit einem größeren Durchmesser besitzt, wie dies in Fig. 5a gezeigt ist. Dieser hat den Vorteil, dass er mit einem Werkzeug wie einer Pinzette in jeder Lage einen Formschluss ermöglicht, was eine an einer einzigen Stelle platzierte Vertiefung weniger gut zu leisten vermag.

Auch ein anderer, zum Beispiel ein eckiger Querschnitt mit einer umlaufenden Rille würde demselben Zweck dienen. Dies ist in Fig. 4 dargestellt.

Auch andere Möglichkeiten zum Herausziehen sind denkbar, wobei hier noch als weiteres Beispiel die Möglichkeit genannt sei, eine Öse 13 anzubringen, wie in Fig. 5b dargestellt.

Die erfindungsgemäßen Interdentalkeile sind ― soweit eine Krümmung in Richtung der Innenseite 2 vorgesehen ist ―sowohl in rechts- als auch in links gebogener Ausführung vorgesehen.

In der Praxis bietet es sich an, die verschiedenen Ausführungen in stark verschiedenen Farbtönen anzubieten. Als Beispiele seien Blautöne für links gebogen und Gelbtöne für rechts gebogen genannt.

Da der Interdentalbereich bei jedem Menschen und auch zwischen jedem Zahn unterschiedlich breit ist, ist es zweckmäßig, auch Interdentalkeile in verschiedenen Größen vorzusehen. Als schnelle und einfache Unterscheidung der Größe kann eine Variation des Grundfarbtons, zum Beispiel von hell für klein nach dunkel für groß vorgesehen werden.

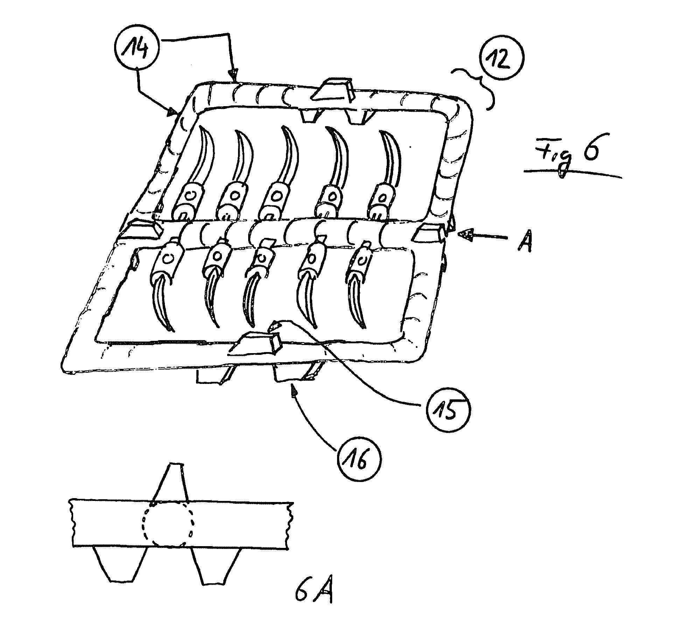

Die erfindungsgemäßen Interdentalkeile können in einer Vielzahl auf einem gemeinsamen Träger 12 angeordnet sein. Eine solche Anordnung ist in Fig. 6 dargestellt. Dieser Träger kann zusammen mit den Keilen im Spritzguss-Verfahren hergestellt werden. Träger und Keile sind damit zunächst gemeinsam einteilig ausgeführt. Die Verbindung zwischen den Keilen und dem Träger ist ein dünner Kunststofffilm oder -steg, der als Sollbruchstelle fungiert. Für die Verwendung kann jeweils ein einziger Keil abgebrochen werden. Diese Art der Bereitstellung ist auch aus hygienischen Gesichtspunkten sinnvoll, weil kein bereits verwendeter Keil aus Versehen zurückgelegt werden kann, was beispielsweise bei einer Aufbewahrung in einer losen Schüttung passieren kann.

Der Träger besitzt eine umlaufende Schutzkante 14, die den Keilspitzen vorgelagert ist. Diese dient dazu, die empfindlichen Keilspitzen während der Lagerung oder dem Transport vor einem unbeabsichtigten Abknicken zu schützen. In Fig. 6 ist ein solcher Träger in im Wesentlichen eckiger Form dargestellt. Eine runde Ausführung oder jede andere Form ist ebenfalls möglich.

Der Träger weist in diesem Beispiel ferner bestimmte, für die Anwendung der enthaltenen Keile wichtige Informationen auf.

Um eine Vielzahl Träger zusammen lagern zu können, weist der erfindungsgemäße Träger eine Stapelhilfe 15, 16 auf. In Fig. 6 sind an vier Stellen sowohl an der Ober- als auch an der Unterseite ineinander nestende Verdickungen zu sehen, die eine sichere Stapelbarkeit gewährleisten.

Die vorliegenden Erfindung betrifft insbesondere einen Interdentalkeil aus Kunststoff mit einem proximalen Ende und einem distalen Ende und mit einem im wesentlichen dreieckigen Querschnitt in einem Einführbereich, wobei eine Unterseite des Interdentalkeils auf einer mindestens einachsig gekrümmten Fläche liegt und der Verlauf eines Flächenschwerpunktes der Querschnitte vom proximalen Ende zum distalen Ende hin einer zweiten, mindestens einachsig gekrümmten Fläche folgt, wobei die beiden Achsen senkrecht aufeinander stehen und sich der Querschnitt vom proximalen Ende zum distalen Ende hin verkleinert und die nach innen gekrümmte Seite eine Kante aufweist. Die an der nach innen gekrümmten Seite vorhandene Kante bevorzugt eine Abdichtkante und dazu geeignet ist, unter die Kante einer Metallmatrize zu fassen und dort einen Spalt zu verschließen. Es kann vorgesehen sein, dass der Keil aus zwei verschiedenen Materialien besteht und der Bereich, der die zur Abdichtung vorgesehene Kante bildet, weicher und/oder flexibler als der restliche Bereich ist. Eine weitere Möglichkeit besteht darin, dass die zur Abdichtung vorgesehene Kante mit einer oder mehreren flexiblen Lippen ausgestattet ist. Vorteilhafterweise ist der Kantenradius der nach innen gewölbten, zur Anlage an den Zahn vorgesehenen Kante kleiner als 0,3 mm. Ferner kann die Krümmung der Unterseite im Verlauf vom proximalen Ende zum distalen Ende in verschiedenen Abschnitten sowohl nach unten gerichtet, als auch in anderen Abschnitten nach oben gerichtet sein. Der erfindungsgemäße Interdentalkeil kann am proximalen Ende Mittel aufweisen, die mit einem Werkzeug gegriffen werden können, um den Keil wieder aus einer festen Verkeilung im Interdentalbereich heraus zu ziehen, wobei diese Mittel als Griffabschnitt dienen. Insbesondere können sich auf dem zum Herausziehen vorgesehenen, am proximalen Ende befindlichen Griffabschnitt Vertiefungen befinden, die eine formschlüssige Krafteinleitung beim Greifen mit einer Pinzette oder Zange ermöglichen. Ferner kann der Griffabschnitt auf einer der Unterseite gegenüberliegenden Seite eine Markierung zur Orientierung des Interdentalkeils aufweisen. Der erfindungsgemäße Interdentalkeil kann in einer links-gebogenen und einer rechts-gebogenen Ausführung bereitgestellt werden. Bevorzugt werden hierbei die beiden Biegungsrichtungen durch stark unterschiedliche Farbtöne gekennzeichnet. Zudem sind vorteilhafterweise von den links gebogenen und von den rechts gebogenen Ausführungen jeweils verschiedene Größen vorgesehen, wobei die verschiedenen Größen insbesondere durch unterschiedliche Schattierungen oder eng bei einander liegende Farbtöne gekennzeichnet sind. Zur einfacheren Handhabbarkeit kann vorgesehen sein, dass eine Vielzahl gleicher oder auch unterschiedlicher Keile auf einem gemeinsamen Träger angeordnet sind und für die Anwendung abgenommen werden können, wobei der Träger bevorzugt Mittel besitzt, die ein Stapeln ermöglichen. Insbesondere ist es vorteilhaft, wenn der Träger aus demselben Grund-Kunststoffmaterial wie die Keile besteht und einstückig mit den Keilen zusammen hergestellt wird, wobei die einzelnen Keile zur Entnahme abgebrochen werden können. Der Träger kann im Wesentlichen rund ausgestaltet sein und einen Schutzring besitzen, der die Keilspitzen während der Lagerung und des Transportes vor Beschädigung schützt, wobei der Träger zudem oder alternative mit Hinweisen zur Ausführungsform der jeweiligen Interdentalkeile oder zur Verwendung ausgestattet sein.

## Patentansprüche

1. Interdentalkeil zur Verwendung mit einem Matrizenband (17) bei einer Erstellung einer Füllung an einem zu restaurierenden Zahn und/oder zur Verwendung mit einem Kofferdam unter Einführung des Interdentalkeils in einen gingivanahen Bereich zwischen dem zu restaurierenden oder zu therapierenden Zahn und einem angrenzenden Zahn, mit:
einem Einführbereich mit einem von einer Unterseite (3), einer Innenseite (2) und einer Außenseite begrenzten Querschnitt, wobei im gingivanah eingeführten Zustand die Unterseite (3) dem Zahnfleisch (4), die Innenseite (2) dem zu restaurierenden oder zu therapierenden Zahn und die Außenseite dem angrenzenden Zahn zugewandt sind,
wobei die Innenseite (2) und die Unterseite (3) in einer Kante (1) zusammenlaufen, die dazu ausgestaltet ist, im gingivanah eingeführten Zustand am zu restaurierenden oder zu therapierenden Zahn anzuliegen, um gegen einen Durchtritt von Material dichtend zu wirken.

2. Interdentalkeil nach Anspruch 1,
wobei sich der Einführbereich in Richtung einer Spitze des Einführbereichs zumindest teilweise verjüngt.

3. Interdentalkeil nach einem der vorstehenden Ansprüche,
wobei die Innenseite (2) zumindest teilweise konkav und die Außenseite zumindest teilweise konvex ausgeführt sind.

4. Interdentalkeil nach einem der vorstehenden Ansprüche,
wobei die Unterseite (3) zumindest teilweise konkav ausgeführt ist.

5. Interdentalkeil nach einem der vorstehenden Ansprüche,
wobei ein Eckenradius der Kante (1) im Bereich von 0,01 bis 0,3 mm liegt.

6. Interdentalkeil nach einem der vorstehenden Ansprüche,
wobei der Einführbereich zumindest teilweise in Richtung der Innenseite (2) gekrümmt ist.

7. Interdentalkeil nach einem der vorstehenden Ansprüche,
wobei die Unterseite (3) zumindest teilweise in Richtung des Übergangs (5) zwischen Innenseite (2) und Außenseite gekrümmt ist.

8. lnterdentalkeil nach einem der vorstehenden Ansprüche,
ferner mit einem Begrenzungsbereich (6), der zum Einführbereich benachbart ist und einen gegenüber dem Einführbereich vergrößerten Querschnitt aufweist, um eine Einführtiefe des Einführbereichs in Längsrichtung in den gingivanahen Bereich zu begrenzen.

9. Interdentalkeil nach einem der vorstehenden Ansprüche,
wobei sich die Kante (1) am Ende einer Dichtlippe (9) befindet, insbesondere einer Dichtlippe (9) mit im Wesentlichen konstanter Dicke.

10. Interdentalkeil nach einem der vorstehenden Ansprüche,
wobei die Innenseite (2) zumindest teilweise zusätzlich zur Kante (1) einen vorspringenden Dichtungsbereich aufweist, der dazu ausgestaltet ist, im gingivanah eingeführten Zustand des Interdentalkeils am zu restaurierenden oder zu therapierenden Zahn anzuliegen, um gegen einen Durchtritt von Material dichtend zu wirken.

11. Interdentalkeil nach einem der vorstehenden Ansprüche,
wobei der Interdentalkeil in einem Kantenbereich (8) eine im Vergleich zu einem Bereich außerhalb des Kantenbereichs (8) geringere Festigkeit und/oder eine höhere Elastizität aufweist.

12. Interdentalkeil nach Anspruch 11,
wobei der Kantenbereich (8) aus einem anderen Material als der Bereich außerhalb des Kantenbereichs (8) hergestellt ist, wobei der Interdentalkeil insbesondere mittels eines Mehrkomponenten-Spritzguss-Verfahrens hergestellt ist.
